# EUROPEAN PATENT APPLICATION

(11) **EP 4 305 971 A1**
(43) Date of publication of application: **17.01.2024**
(21) Application number: 22184548.0
(22) Date of filing: 12.07.2022
(51) Int. Cl.: A23N 7/00, G06N 20/00

(54) **CONTROL OF A PEELING SYSTEM**

(71) Applicant: Tomra Sorting Limited, Dublin 2 (IE)
(72) Inventor: McGloughlin, John, Maynooth (IE)
(74) Representative: Tomkins & Co

(57) **Abstract**

A method of controlling a peeling system is provided comprising monitoring at least one sensor configured to detect data indicating a characteristic of a flow of a peelable product through the system; providing the data to a virtual model of the peeling system; adjusting the operation of the peeling system based on an output of the virtual model.

## Description

### Field of the Invention

The present invention relates to a peeling system and in particular to control of a peeling system using data provided from a virtual representation of the system.

### Background to the Invention

Mechanical peeling methods are used on many food processing lines including potato processing lines for strip cut and sliced potato products. Peeling machines can take many forms including steam peelers, abrasive peelers and knife peelers. Other forms of peeling machines can employ chemical peeling methods like caustic and lye peeling. In some cases, the peeling device will also be used to remove some surface defects and blemishes. When used herein the term "peeling" is intended to refer to any manor of outer surface removal, including but not limited to peeling by steam, abrasion, knife, chemical or polishing.

Peeling systems remove a thin layer of the product being peeled, ideally just the layer containing the peel or rind, with minimal or no removal and loss of the adjacent good product flesh. However, some of the good product is removed and all peeling systems must deal with this conflict of removing maximum peel and surface defect while minimizing loss of good product. The greatest challenge to a peeling system is the minimization of good material loss while maximizing the removal of peel or the unwanted outer surface. Within the scope of this invention the term, peeling aggressiveness, is used to refer to this balance to be reach between over peeling and under peeling. A secondary but important concern to the industry using peeling systems is the energy consumption of the system, which should be minimized while still removing the peel at economical production rates. A further concern is the volume of waste and contaminated water produced by the peeling process that needs to be filtered and processed and disposed of.

Quality peeling relies on a large number of factors including, for example, product size and quality (including product defects) as well as the pressure and temperature at different points in the peeling system. A change in one of these factors during a peeling process or indeed, a miscalculation or misinterpretation of one of these factors prior to commencing a peeling process can have a detrimental effect on the peel quality. Furthermore, the peeling process may have been in progress for a period of time before a deterioration in peel quality is detected. This is often due to the fact that such deterioration is usually highlighted by means of a visual inspection, either by personnel on the system floor or by visual inspection of a camera trained on an output of the system.

Furthermore, much inefficiency in current peeling systems arises from down time in the peeling process. Down time can often be as a result of stopping a process in order to alter a parameter in the system. The trigger for such a parameter change is typically an indication of a deterioration in peel quality at an output of the system, again usually noted by a visual inspection. Stopping and starting a process in this manner is inefficient and can further introduce energy wastage. One example being the energy used in bringing back up to temperature of certain equipment for optimal operation. Such problems lead to a combination of inefficient stop/start processing and variable quality of product output.

A control system which took account of real time data from the peeling process to ensure an optimised peeling process and desired peeled product would be an improvement over the state of the art. This would provide for an energy and cost-efficient peeling system with an increase in peel quality with more reliability and less system down time.

### Summary of the Invention

A method of controlling a peeling system is provided comprising:
monitoring, in real time, a peeling process of the peeling system and a product being peeled by the peeling system using:
   at least a first sensor for monitoring at least one characteristic of the product, and
   for monitoring the operation of the peeling process;
obtaining data from the at least first sensor for a simulation, said simulation to simulate the peeling process and a product flow through the peeling system in a virtual model, the simulation comprising;
comparing, using an optimizer of the virtual model, at least one simulated output of the virtual model with at least one desired output of the peeling system;
adjusting control parameters of the virtual model using an output of the optimizer and iteratively re-simulating the peeling process and product flow until the at least one simulated output from the virtual model matches the at least one desired output of the peeling system within a specified tolerance;
applying, in real time, the adjusted control parameters from the simulation of the virtual model to the peeling system;
running products to be peeled through the peeling system;
monitoring the products and the peeling process and comparing the results to the simulation;
utilizing any identified difference between a measured output of the peeling system and the output of the virtual model to refine the virtual model for more accurate representation of the output of the peeling system.

This is advantageous as data can be obtained with respect to the flow of the products through the peeling system and/or with respect to the products itself in real-time. This data may be processed or simulated and provided to the virtual model of the peeling system allowing the operation of the peeling system to be adjusted based on the data, also in real-time. This provides for optimising the operation of the peeling system (i.e. the physical peeling system in real-time based on data derived from the system as it is in use. It will be appreciated by those skilled in the art that the 'output' of the peeling system as described may indicate a physical output of the peeler, as in peeled product output. In addition, the "output" may also indicate any product data or system data output from sensors in the system. Real-time is given its ordinary interpretation with respect to processes and controls of processes, i.e. real time is taken to mean the actual time during which a process or event occurs and specifically relating to a system in which input data is processed at high frequency so that it is available virtually immediately as feedback to the process from which it is derived.

In effect an optimization iteration loop is provided wherein a simulation may be run and adjusted and the output of the simulation compared with a desired result (for example, a peel quality or a chosen monitored system parameter) until the prediction from the simulation is considered to be close enough to the desired result. Once this is achieved, the resulting settings and parameters may be applied to the physical system. The virtual model of the system acts as a digital twin of the physical peeling system and provides a virtual or software environment in which simulations of the physical system may be adjusted and analysed and further wherein performance and output of the physical system may be compared to the simulations. The outputs of the physical system may be monitored and compared to a simulated prediction from the "twin" in order to refine the simulation. The simulation in turn may be used to refine the performance of the physical system. In this manner, visual inspection, by people, of the product line in an attempt to ascertain product quality or peeling quality may be minimised. Furthermore, downtime of the peeling system is minimised as the system does not necessarily have to be stopped to perform inspections or systems adjustments. This results in an energy and cost-efficient peeling system with an increase in peel quality with more reliability and less system down time.

The virtual model may comprise the optimizer and at least one of a simulator to represent the operation of the peeling system; a simulated product flow to simulate the effect of the peeling system on the product; and a simulated product to simulate the effect of the product on the operation of the peeling system and/or the effect of the peeling system on the product.

This is advantageous as the simulator and the optimizer may work together iteratively to optimize one or more outputs of the virtual model. This in turn provides for comparing a simulated output of the virtual model with an output of the peeling system, i.e. the physical system. As such, the opportunity is provided to compare a simulated output with a "real world" output of the physical system. This allows for adjustment of the operation of the peeling system based on differences between an idealized output of the simulator and a physical output of the peeling system.

The optimizer may be further configured to:
i) analyse the output of the simulator and its effect on the simulated product and/or the effect of the peeling system on the product;
ii) compare the simulated output of the simulator to a pre-specified output; and
iii) adjust the control parameters to minimise a difference or error between the simulated output and the pre-specified output;
iv) repeat steps i) to iii) iteratively to provide optimized control parameters, wherein the optimized control parameters are determined when the difference or error between the simulated output and the pre-specified output is within a predetermined tolerance, the pre-specified output being defined by a desired product specification.

The method may further comprise applying the optimized control parameters to the peeling system.

This provides for optimization of the operation of the peeling system as defined by the determined optimized control parameters. Optimization may be considered mathematically as minimising the delta or error between the desired output of the peeling system and the simulated output, typically by iterative minimization steps. This provides for a type of model predictive control over the operation of the peeling system.

The control parameters may effect the adjustment of at least one component of the peeling system and may include adjustment of at least one of:
an input product volume control;
a primary peeler;
a secondary peeler;
a loose peel separator;
a washing system; and/or
a product sorting system;
of the peeling system. Each of the above elements are components of the peeling system, however, a person skilled in the art will understand that variations of these components are possible. As such, providing for adjustment of at least one of the components of the peeling system is advantageous as any such adjustment will have a significant effect on the peel quality of peelable product flowing through the system.

The control parameters effect the adjustment of at least one of:
a product flow through the peeling system;
a temperature at the primary peeler by the application of heat or heat carrying medium;
a temperature at the secondary peeler by the application of heat or heat carrying medium;
a peeling aggressiveness at the first peeler;
a peeling aggressiveness at the secondary peeler;
a sorting control for peel;
a sorting control for defects;
a sorting control for directing a specific volume of product.
a steam pressure in the system;
a vessel temperature at the primary and/or secondary peeler;
a vessel agitation at the primary and/or secondary peeler;
a rotation speed of the primary and/or secondary peeler;
a number of rotation cycles at the primary and/or secondary peeler.

Each of the above are parameters to be defined when aiming for a specific peel quality at the output of the peeling system. As such, providing for adjustment of at least one of these parameters is advantageous as it will have a significant effect on the peel quality of peelable product flowing through the peeling system.

A characteristic of the product comprises a product peelable skin coverage and quality. Visual inspection of the product can inform on the product skin quality, to get an estimate of how difficult it is to peel. Skin quality may also be assessed by variety and age or time in storage, possibly storage conditions. This information may be supplied to the peeling system from the plant operator or through the plant process control network.

A further characteristic of the product comprises a product non-peelable defect coverage; a product size and/or surface area and/or volume. Information regarding what is peelable and non-peelable means the peeling system does not mis-adjust for peel that it cannot remove, resulting in over-peeling and product loss. It should be noted that the term "non-peelable" may refer to being non-peelable by the primary peeler if it is to be directed to a secondary peeler that can remove it. Furthermore, it can also refer to non-peelable defect that needs to be sent to waste because it cannot be peeled by either primary or secondary peeling devices. A further characteristic of the product comprises a product temperature. Peel is a surface condition, i.e., more surface means more peel. Thermal transfer is related to surface contact with the heat transfer medium (steam). Thus, measuring a thermal transfer provides a direct relationship to correct heat energy to be applied. The temperature of the product relates to the initial amount of heat energy that is required to cook its skin A further characteristic of the product comprises a product variety or type. Knowing a product variety can provide information for other parameters about the peelability and performance of that variety in the peeling system.

Each of the above are significant characteristics of a peelable product itself which in turn will have a direct impact on the effectiveness of any peeling process applied to the peelable product. As such, providing at least a first sensor for monitoring at least one characteristic of the product is advantageous as it provides that such data relating to the product, directly linked to product quality, may be provided to the virtual model of the peeling system to optimise operation of the peeling system.

A product flow may comprise at least one of:
a product flow speed;
a product flow volume and or mass;
a product flow duration, pause or dwell time;
a product flow piece count.

These are significant characteristics of the flow of product through the peeling system. Once again, providing at least a first sensor for monitoring at least one characteristic of the product flow is advantageous as it provides that such data may be provided to the virtual model of the peeling system to optimise operation of the peeling system.

The output of the virtual model provides an indication of predicted peel removal quality and/or defect removal quality of the product. This allows for adjustment of the operation of the peeling system based on differences between a simulated peel quality derived from an output of the virtual model and an observed physical output of the peeling system.

The output of the virtual model may be produced by applying machine learning and/or artificial intelligence to at least one of:
data from the at least a first sensor to simulate the peeling process and product flow;
historical data of the peeling system;
data from an additional system, external to the peeling system;
data from additional simulations, external to the peeling system;
data from cloud storage and/or cloud computer systems.

Within the scope of this invention, artificial intelligence is understood to be a technology that enables a machine to simulate human behaviour. Machine learning is a subset of artificial intelligence which allows a machine to automatically learn from past data without programming explicitly. Reference to these terms should thus be understood in their broad sense and includes learning techniques such as deep learning and/or neural networks. In this manner, predictions as to the operation of the peeling system may be performed by the virtual model. This is advantageous as the predictions may be used to define the operation of the peeling system in a number of ways. For example, initial starting data may be provided to the virtual model and a predicted output of a product or of a parameter may be provided based on the provided data. Parameters of the peeling system may be adjusted in order to "match" the predicted output with a physical output within a specified tolerance. In addition, the predicted output may provide an indication of errors or faults within the peeling system wherein it is observed that a predicted output deviates significantly from an output from the physical system. In such a manner, the predicted output may provide for preventative fault management, wherein sub optimal physical operation of peeling system components are highlighted before further deterioration or break down of the components. Accordingly, the output of the virtual model may provide a fault indication or an alarm. Again, this provides the advantage of minimised system downtime for repair or replacement of parts. In addition the use of historical data is advantageous as the virtual model is thus provided with information relating to previous product flows through the peeling system. This data may, for example, comprise data on peelable products with similar characterises to a next proposed product ready for loading into the peeling system. Accordingly, the virtual model may simulate a product flow through the peeling system based on the historical input. Again, the output of the simulation may be analysed to examine whether it falls within an acceptable quality range. If so, the peeling system may be configured with initial operating conditions based on historical data. This is advantageous as it provides that operating conditions do not have to be determined from scratch in scenarios where data derived from similar product flows through the peeling system is available. The use of data from an additional system, external to the peeling system; data from additional simulations, external to the peeling system or data from cloud storage is similarly advantageous.

In a further aspect of the invention, a method of controlling a peeling system is provided comprising:
providing, to a virtual model of the peeling system, an input comprising at least one initial operating condition based on a characteristic of a flow of a peelable product through the peeling system;
simulating, in the virtual model, a product flow through the peeling system based on the input to obtain a simulation;
analysing an output of the simulation to obtain an analysis;
adjusting the at least one operating condition based on the analysis to produce an updated initial operating condition;
providing the updated initial operating condition to the peeling system.

This is advantageous as initial operating conditions for the peeling system may be provided to the virtual model of the peeling system to provide a simulated output. This simulated output may be analysed to examine whether it falls within an acceptable quality range. The operating condition may be adjusted until the output is of a sufficient desired quality. Thus, this adjusted initial operating condition may be provided to the peeling system prior to commencement of the peeling process. In this manner, the peeling system is set up or calibrated prior to use to achieve a target quality based on the output of the simulation.

In a further aspect of the invention, a peeling system is provided comprising: a primary peeler for receiving a peelable product; a first sensor configured to monitor the peelable product at the primary peeler; wherein the first sensor is further configured to provide monitored information to a virtual model of the peeling system for adjusting the operation of the peeling system based on the monitored information. In this manner, the operation of the peeling system may be adjusted based on information provided from a sensor at the primary peeler to the virtual model of the peeling system.

The peeling system may further comprise a secondary peeler configured to receive partially peeled product from the primary peeler; a second sensor configured to monitor the peelable product at the secondary peeling device; wherein the first and second sensor are configured to provide monitored information to the virtual model of the peeling system for adjusting the operation of the peeling system based on the monitored information. In this manner, the operation of the peeling system may be adjusted based on information provided from a first sensor at the primary peeler and a second sensor at the secondary peeler to the virtual model of the peeling system.

In a further aspect of the invention, a peeling system is provided comprising:
means for monitoring, in real time, of a peeling process of the peeling system and a product being peeled by the peeling system using:
   at least a first sensor for monitoring at least one characteristic of the product, and
   for monitoring the operation of the peeling process;
means for obtaining data from the at least first sensor to simulate the peeling process and a product flow through the peeling system in a virtual model to obtain a simulation, the simulation comprising:
   means for comparing, using an optimizer of the virtual model, at least one simulated output of the virtual model with at least one desired output of the peeling system;
   means for adjusting control parameters of the virtual model using an output of the optimizer and iteratively re-simulating the peeling process and product flow until the output from the virtual model matches the at least one desired output within a specified tolerance;
   means for applying, in real time, the adjusted control parameters from the simulation of the virtual model to the peeling system;
   means for running a product to be peeled through the peeling system;
   means for monitoring the product and peeling process and comparing the results to the simulation;
   means for utilizing any identified difference between a measured output of the peeling system and the output of the virtual model to refine the virtual model for more accurate representation of the output of the peeling system.

Such a control system provides that data can be obtained with respect to the flow of a product through the peeling system and/or with respect to the product itself in real-time. This data may be processed or simulated and provided to a virtual model of the peeling system allowing the operation of the peeling system to be adjusted based on the data.

### Description of the Drawings

**Figure 1** is a representation of a peeling process flow carried out by a peeling system
**Figure 2** is a schematic representation of a Model Predictive Control (MPC) process
**Figure 3** is a schematic representation of a Model Predictive Control (MPC) process for control of a peeling system
**Figure 4a** is a schematic representation of a peeling system
**Figure 4b** is a schematic representation of a peeling system further indicating monitoring and control aspects as per the present invention

### Detailed Description

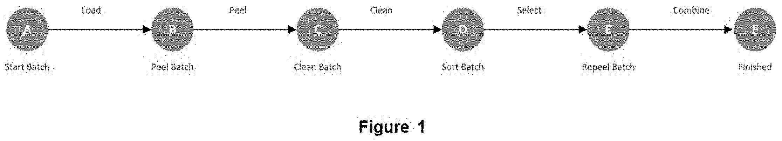

Before describing the functionality of the present invention, a brief description of a typical peeling process and system is provided. **Figure 1** is a representation of a peeling process flow carried out by a peeling system.

The steps undertaken during the peeling/sorting stage are summarised in more detail below.

### A-Start Batch

Step A comprises firstly evaluating the raw material (e.g., potatoes) with respect to size, temperature, peel type and defects. A batch size is selected based on estimates of size distribution and throughput constraints of the system, i.e., what rate of flow of product through a given system is achievable. The steam pressure available and the temperature of the steam vessel is assessed. A peel time is set based on the evaluation of the raw material, batch size and steam temperature information. The batch is loaded into the steam vessel and a cycle is begun.

### B - Peel Batch

The steam vessel acts as a primary peeler for the loaded batch. The vessel rotates the potatoes in a pressurized steam environment. Pressure is assessed throughout the cycle. At the end of the set peel time, a dump cycle is executed, and the vessel is rotated to dump the potatoes.

### C - Clean Batch

The potatoes are transported to DPS by an Auger discharge. The potatoes are run through a DPS to remove loose peel from the potatoes. A brusher removes remaining attached peel. The product is then run over hex-feed to remove any product slivers and to spread the product evenly for sorting.

### D - Sort

The sorter removes foreign material and defects to trash and sorts the remaining product into "in-specification" and "out of specification".

### E - Repeel Batch

The secondary peeler peels all product received from the sorter. Peeled output from the secondary peeler is resorted through a channel in the sorter. Under-peeled output from the secondary peeler is sorted to be re-peeled again.

### F - Finished

"In -specification" product is output and a final inspection and scoring of the output product is undertaken to ensure it is of the required quality.

Control of such systems present a number of issues. In existing peeling systems, the sorter and steam vessel may be controlled by a Powertrain Control Module (PCM) system. Such a system provides limited control and visibility of the system parameters and of the product characteristics determining peel quality. For example, whether a product is determined to be within or outside specification may not be known until a quality control stage after peeling/sorting. The peeling/sorting stage is further not capable of coping with a full range of input product quality without significant adjustment. The sorter control may also be independent of the peeling control. Peel efficiency is further dependent on steam quality at the steam vessel, however the quality of steam may remain unmonitored and ultimately unknown throughout the process. In addition, the incoming product specification, the batch size of the product and the steam vessel temperature have an interdependent relationship which affects peel quality. Yet this dependency is unassessed by current control systems. The method of the present invention attempts to address such inadequacies.

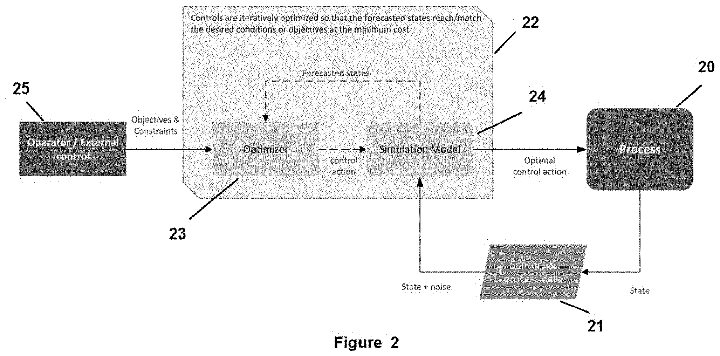

**Figure 2** is a schematic representation of a system, for example a peeling system, implemented with a control method according to the present invention. The method utilizes a form of model predictive control (MPC). MPC is a method used to control a system or process while satisfying a set of constraints. Model predictive controllers rely on dynamic models or virtual models of the process under control. Data obtained from operating the process is provided to the model which is used to generate a simulated output. The simulated output may be compared to the actual output to adjust control parameters for the system.

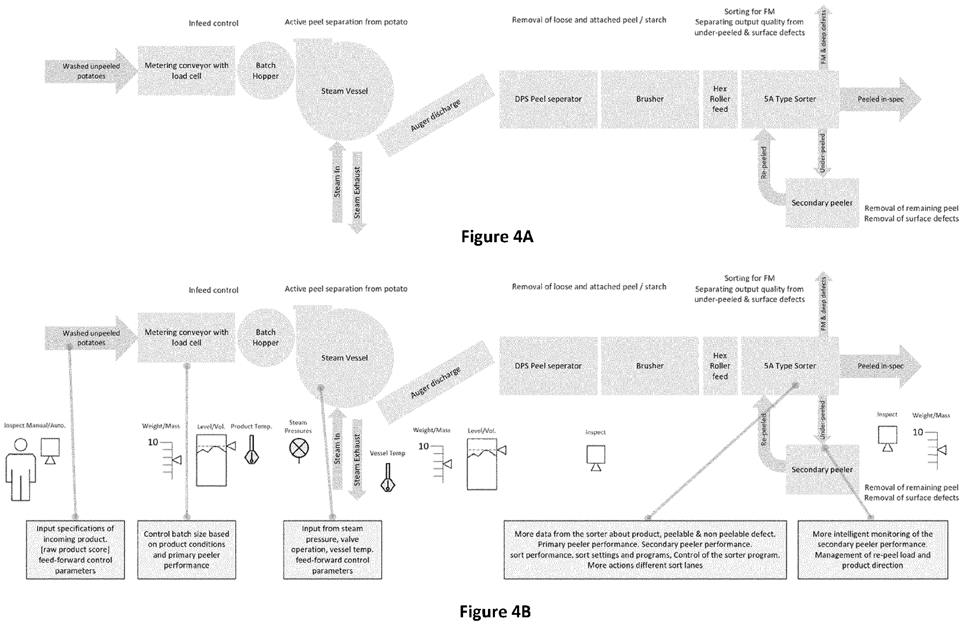

With respect to Figure 2, the process 20 represented therein may be considered to be the Peeling/Sorting Process as described with respect to Figures 1 and Figures 4A and 4B as described further below.

The method of the present invention provides for monitoring, in real time, of a peeling and or sorting process of the system and a product being peeled and sorted by the system using at least a first sensor 21 for monitoring at least one characteristic of the product, and for monitoring the operation of the process;

A number of sensors may be placed at different points throughout the system (See for example, Figure 4B) to gather relevant process state data regarding the operation of the peeling/sorting equipment and the product flowing through the equipment. This detected data is provided to the virtual model 22 of the peeling system. The virtual model 22 is shown as comprising an optimizer 23 and a simulator 24 or simulation model. The simulator 24 functions to represent the operation of the peeling and sorting system. Furthermore, a simulated product is provided (but not shown in the Figure) to simulate the effect of the product on the operation of the peeling system and the system on the product. In addition, a simulated product flow (not shown) is provided to simulate the effect of the peeling system on the product. A product flow describes the movement of product through the peeling system. The product flow is defined by a number of factors including but not limited to a product flow speed; a product flow volume and or mass; a product flow duration, pause or dwell time; a product flow piece count.

Data obtained from the at least first sensor is utilised to simulate the peeling process and a product flow through the peeling system in a virtual model. The simulation comprises using the optimizer 23 to compare at least one simulated output of the virtual model 22 with at least one desired output of the peeling system. Control parameters of the virtual model are adjusted using an output of the optimizer. The peeling process and product flow is then iteratively re-simulated until the output from the virtual model matches the at least one desired output within a specified tolerance.

The adjusted control parameters from the simulation of the virtual model are applied in real time to the peeling system. A product flow of product to be peeled is then run through the peeling system. The product and peeling process are monitored, and the results compared to the simulation. Any identified difference between a measured output of the peeling system and the output of the virtual model 22 is utilized to refine the virtual model for more accurate representation of the output of the peeling system. The measured output of the peeling system may be the physical output of the peeler, as in peeled product. Furthermore, the measured output may be any product or data output from the system or sensors in the system.

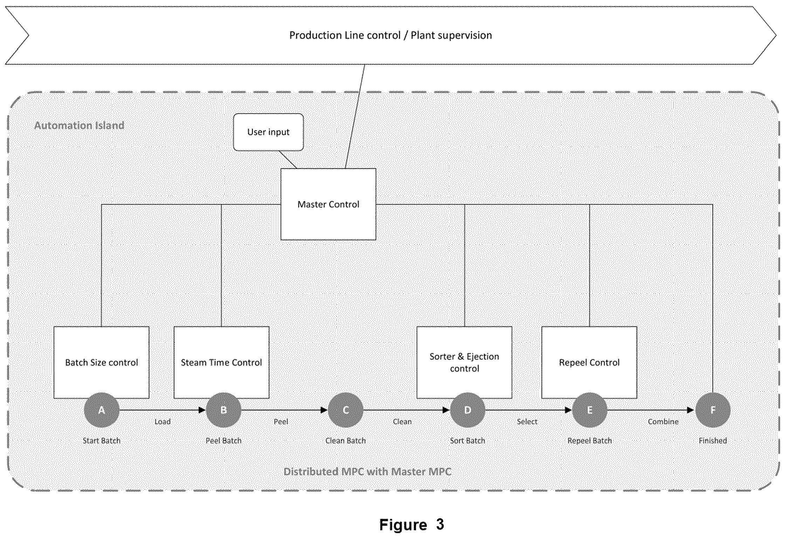

The optimizer 23 may further be provided with external inputs from an operator or external control 25. The external inputs may comprise, for example, output specifications, specific heat values and dry solids content. Figure 3 shows how a loop of information is created to provide process data from the physical equipment (i.e., as detected from sensors distributed throughout the system) to the simulator 24. A further loop is created by providing from the simulator 24 to the optimizer 23, updated simulation forecasts. This in turn allows the optimizer 23 to provide updated control actions to the simulator 24, which ultimately translate to updated control parameters for the physical equipment.

The optimizer is configured to: i) analyse the output of the simulator and its effect on the simulated product and ii) compare the simulated output of the simulator to a pre-specified output. The optimizer may then iii) adjust the control parameters to minimise a difference or error between the simulated output and the pre-specified output.

Furthermore, the optimizer is configured repeat steps i) to iii) iteratively to provide optimized control parameters. The optimized control parameters are determined when the difference or error between the simulated output and the pre-specified output is within a predetermined tolerance. The pre-specified output is defined by a desired product specification. For example, the pre-specified output may be a peel quality for a given peelable product. The pre-specified output may also be a data output of any aspect of the peeling system. The optimized control parameters may then be applied to the peeling system.

In addition, adjusting the control parameters24 may comprise minimising the error between an output of the simulator and a target output of the peeling system. The output may be a selected parameter or threshold defined for any of the parts of the process set out as A to F above. The output of the virtual model is produced by applying machine learning and/or artificial intelligence to at least one of data from the sensors within the peeling system to simulate the peeling process and product flow. The output of the virtual model may also be produced by applying machine learning and/or artificial intelligence to historical data from the peeling system; data from an additional system, external to the peeling system (for example a further peeling system in a different production environment); data from additional simulations, external to the peeling system; and data from cloud storage. Furthermore, an output of the virtual model is configured to provide an overall indication of peel quality for a given peelable product. 22 This virtual peel quality may be compared to the output from the physical system. For example, the physical output at the sorter 13 may be examined for overall peel quality and to examine whether the output product is within or outside specification. Furthermore, the physical output may be compared to the predicted simulated output, i.e., the virtual peel quality, from the virtual model 22. In this manner, the accuracy of the predicated simulated output may be ascertained. The simulator 24 may be adjusted, for example by manual input, to adjust the simulated output based on the observed physical output.

It is noted that providing a circulation of information as described provides for iteratively adjusting the operation of the peeling system.

**Figure 3** is a schematic representation of a control method for control of a peeling system. Figure 3 indicates how the control method described with respect to Figure 3 may be applied across the Peeling/Sorting Process as described in Figures 1 and 2. In effect, individual controls and control parameters as described may be applied to a number of steps A to F of the Peeling/Sorting process, i.e. Batch Size Control is applied to Step A-Start Batch; Steam Time Control is applied to Step B - Peel Batch; Sorter and Ejection Control is applied to Step D - Sort Batch and Repeel Control is applied to Step E - Repeel Batch. This provides, in effect, a series of distributed MPC controls placed throughout the process along with a master MPC providing overall control and oversight. User input may also be applied to the master control as required. In addition, an overall production line control or plant supervision may be linked to the master control. In this manner, centralised control and monitoring of an entire production line may be provided.

Applying Batch Size control at Step A provides for enhanced monitoring and iterative control of a number of process aspects undertaken at Step A. For example, additional monitoring and evaluation may be provided by sensors configured to evaluate raw material size temperature, peel type and defects. Additional monitoring and evaluation may be provided by sensors configured to evaluate, for example, available steam pressure and temperature and measure the vessel temperature. Furthermore, applying Batch Size control may allow to provide dynamic adjustment of the process based on the data from the process, model simulation and the required product specification. Adjustment of the primary peeler may be undertaken. In addition, adjustment may be provided of the batch size and volume. Adjustment may also be provided for the peel time for batch.

Applying Steam Time control at Step B provides for enhanced monitoring and iterative control of a number of process aspects undertaken at Step B. For example, additional monitoring and evaluation may be provided by sensors configured to open the steam inlet to the steam vessel, to pressurize the vessel and the measure the steam pressurization cycle. Further data may be obtained from sensors configured to release the steam pressure and to measure the steam release profile while discharging steam.

Applying Sorter and Ejection control at Step D provides for enhanced monitoring and iterative control of a number of process aspects undertaken at Step D. For example, additional monitoring and evaluation may be provided by sensors configured to obtain data about defects identified from images taken of the outputs of steps A to D, to obtain data on how much product is sent to the secondary peeler and to send data about size and defects on products sent to the repeel stage. Furthermore, applying Sorter and Ejection control may allow to provide dynamic adjustment of the process. For example, adjustment may be provided of the sorter operation as to which products are sorted as in -specification, out of specification and discarded. Adjustments to the brusher operation may also be provided.

Applying Repeel control at Step E provides for enhanced monitoring and iterative control of a number of process aspects undertaken at Step E. For example, additional monitoring and evaluation may be provided by sensors configured to obtain data as to the effectiveness of the repeeling. Furthermore, applying Repeel control may allow to provide dynamic adjustment of the process based on the data from the process, model simulation and the required product specification. For example, adjustment may be provided of the secondary peeler operation.

It is noted that in addition to the adjustments described, additional adjustment of the system may be made in order to optimise the operation of the peeling system. A number of aspects of the peeling system and process may ultimately be controlled and optimised by adjusting the control parameters. Adjusting the control parameters effects the adjustment of at least one of: an input product volume control; a primary peeler; a secondary peeler; a loose peel separator; a washing system; a product sorting system; of the peeling system.

Furthermore, it should be noted that sensors may be introduced at multiple locations throughout the peeling system in order to obtain data for process optimisation. Sensors may be configured to obtain data relating to the product itself, for example, to obtaining data indicating a percentage of product defects; a product temperature; a product surface area; product skin thickness. In addition, sensors may be configured to obtain data relating to the flow of a product, for example, to obtaining data indicating a product flow speed in the system, a product flow duration, a product volume or a throughput of the system. In addition, the control parameters effect the adjustment of a product flow through the peeling system; a temperature at the primary peeler by the application of heat or heat carrying medium; a temperature at the secondary peeler by the application of heat or heat carrying medium; a peeling aggressiveness at the first peeler; a peeling aggressiveness at the secondary peeler; a sorting control for peel; a sorting control for defects; a sorting control for directing a specific volume of product, wherein directing may mean re-direction of product through the system or ejection from a product flow, a steam pressure in the system; a vessel temperature at the primary and/or secondary peeler; a vessel agitation at the primary and/or secondary peeler; a rotation speed of the primary and/or secondary peeler; a number of rotation cycles at the primary and/or secondary peeler.

It should be noted that aspects of the described method may be further applied in advance of commencing a peeling process such that the initial conditions for a peeling process for a given peelable product are optimised. As such, an operator or external control may provide, to the virtual model of the peeling system, an input comprising at least one initial operating condition. The initial operating condition may be an operating parameter of a component of the peeling system, for example an operating parameter of the primary peeler, secondary peeler or the sorter. The optimizer and simulator combination may then simulate a product flow through the peeling system based on the input; and subsequently analyse an output of the simulation. The output may, for example, be an indication of overall peel quality. If the peel quality is not within specification, the initial operating condition may be adjusted and updated based on the analysis to provide an optimized simulated output which is within specification. This updated initial operating condition may then be provided as an input to the physical peeling system, such that the system is set up or calibrated to provide a desired specification of output based on the simulation. Once the process is in progress in the peeling system, it may be adjusted in real time as previously described if, for example, feedback indicates that the output is drifting out of specification.

Input to the peeling system may further take the form of historical data of product flow through the peeling system. This historical data may be used to, in effect, prime the peeling system to operate in a manner based on product flows which have already been undertaken. For example, if the product parameters of a historical product flow appear to be similar to the parameters of a new product to be loaded into the system, then the system parameters may be initialized for the new product based on the parameters used for the historical flow for the similar product.

**Figure 4A** is a schematic representation of a peeling system. The representation provides an overview of a type of peeling system suitable for control by the method of the present invention. This peeling system will be described in brief before aspects of the present invention which provided for enhanced monitoring and control will be described with reference to Figure 4B.

During the peeling process, products undergo a number of preparation stages which convert them from raw product to a final packaged product suitable for sale and consumption. Broadly, these stages comprise: Receiving raw product -> Washing/Sizing/ and Blending -> Peeling/Sorting -> Cutting -> Strip Sorting -> Blanching -> Batter application -> Frying -> Freezing -> Sorting -> Packing. The representation of Figure 4A shows the equipment utilised for the Peeling/Sorting stage of a peelable product. The operation of the peeling and sorting process will be described in brief. A number of problems with existing control methods of such systems will also be described. Note that while the peeling and sorting process undertaken by the peeling system will be described with respect to potatoes, the process and system may be used to peel and sort other types of peel able products and peelable foodstuffs. As such, it should not be taken that the methods and systems described are directed to potatoes only. Peelable products of different kinds may be peeled by the peeling system. The products have a number of characteristics including but not limited to a product peelable skin coverage, a product peelable skin quality; a product non-peelable defect coverage; a product size and/or surface area and/or volume; a product temperature; a product variety or type. These characteristics are used to define the product type undergoing peeling by the system. Furthermore, peelable product is taken to mean any product, in particular a foodstuff, which is capable of being peeled to have an outer layer of product removed. The peelable product is taken to include the unpeeled product, partially peeled product or fully peeled product. Furthermore, "product" is taken to mean one or more of a given item, but more typically multiple product items, for example many thousands of potatoes or other peelable foodstuffs.

### Infeed Control

This part of the process utilises a metering conveyor or product transport mechanism, and a load cell. Washed unpeeled potatoes are fed from the conveyor to a batch hopper. A volumetric measurement system can also be employed to measure depth of fill for an estimate of product volume to be processed.

### Primary Peeler-Active Peel Separation

Potatoes arrive from a batch hopper to a steam vessel which operates as the primary peeler 11 of the system. High pressure steam is fed to the steam vessel which, in combination with rapid de-pressurization, provides for active peel separation. A steam exhaust removes steam from the vessel once a peeling cycle is complete.

### Removal of loose and attached peel and starch

An Auger discharge transports potatoes from the Steam Vessel to a Dry Peel Separator (DPS). The peel separator and a brusher/washer device remove loose and partially attached peel from the product before inspection.

### Sort and Secondary Peeler

Potatoes are fed via a hex-roller, distributing evenly and removing debris, to a sorter 13 device. The device is configured to sort potatoes into i) potatoes peeled within a required specification or peel quality ("in- specification") and ii) potatoes peeled under a required specification or peel quality or containing defects that can be removed by a secondary peeler ("out of specification") and iii) defective potatoes and any detected foreign matter. The defective potatoes and foreign material are discarded, the potatoes peeled within specification are directed out of the sorter 13 while the potatoes which are peeled under the required specification are directed to a secondary peeler 12. At the secondary peeler 12, remaining peel and surface defects may be removed. The re-peeled potatoes are then redirected back to the sorter 13 where again they can be sorted again as per as i), ii) or iii) as described above. In certain applications this re-peeled product may be directly combined with the in-specification product directly without re-inspection and sorting.

**Figure 4B** shows a number of enhancements which provide superior control and monitoring over the system shown in Figure 4A. With reference to Figure 4B, the method of controlling a peeling system of the present invention provides monitoring, in real time, of a peeling process of the peeling system and product being peeled by the peeling system using at least a first sensor for monitoring at least one characteristic of the product, and for monitoring the operation of the process.

With reference to Figure 4B, it is noted that the at least one sensor may be placed at one of a number of different points throughout the peeling system thus offering the capability to monitor characteristics of the product and/or operation of different equipment components which form the peeling system. For example, sensors may be deployed to monitor aspects of washed unpeeled potatoes. For example, the sensor may be deployed and configured to monitor the input specification of incoming product. These can be used to define a "raw product score" or initial product classification. Furthermore, the input specifications of the incoming product can be used to define feed forward control parameters. One or more sensors may be placed about the metering conveyor. This can provide information with respect to weight/mass of the product, a product level or volume as well as a product temperature. One or more sensors may be placed about the steam vessel. This can provide information about steam pressures, valve operations and the vessel temperature. Once again, this information may be used to determine and/or adjust control parameters. One or more sensors may also monitor weight/mass of the product and the product volume at the Auger discharge. One or more sensors may also be deployed at an inspection point after the peel separator. One or more sensors may be placed about the sorter and the secondary peeler. These sensors provide data from the sorter about the product, including peelable and non-peelable defects. In addition, information regarding the primary and secondary peeler performance may be obtained. This allows parameters such as sort settings for control of the sorter program to be defined and adjusted. Sensors at the secondary peeler provide for more intelligent monitoring of the secondary peeler performance. This provides for management of a re-peel load as well as control of the product direction.

It should be noted that the positions of the sensors described are merely one indication of possible sensor positions. One or more sensors may be placed throughout the system to allow for different types of information to be obtained depending on what type of system performance is to be monitored. Furthermore, it should be noted that a single sensor may be capable of monitoring more than a single system aspect and may be capable of obtaining more than one data type.

It has been noted that obtaining data from the sensors provides for a simulation to simulate the peeling process and a product flow through the peeling system in a virtual model. The sensor data obtained may be utilized by the model predictive control process as described with respect to Figure 2 to refine the virtual model for more accurate representation of the output of the peeling system. Furthermore, the process 20 as highlighted in Figure 2 may be performed by the system outlined in Figure 4B.

In addition to the method of control described, a further embodiment provides for a peeling system comprising a primary peeler for receiving a peelable product; a first sensor configured to monitor the peelable product at the primary peeler; wherein the first sensor is further configured to provide monitored information to the virtual model as described for adjusting the operation of the peeling system based on the monitored information.

A secondary peeler may also be configured to receive partially peeled product from the primary peeler. As described, the partially peeled product may also be provided to the secondary peeler from a sorter. A second sensor is configured to monitor the peelable product at the secondary peeling device. The first and second sensor are configured to provide monitored information to the virtual model of the peeling system for adjusting the operation of the peeling system based on the monitored information. In addition, a third sensor may be configured to monitor the peelable product at the sorter and the first, second and third sensor are configured to provide monitored information to the virtual model of the peeling system for adjusting the operation of the peeling system based on the monitored information.

The method as described may be controlled by a computer system and furthermore the method may be implemented in software or any computer program product comprising instructions which, when the program is executed by a computer, cause the computer to carry out the control method as described. The methods described may be carried out by a control system integrated with a physical peeling system comprising a combination and mechanical, electrical, electronic and software means configured to carry out the methods. The control system for a peeling system comprises means for monitoring, in real time, of a peeling process of the peeling system and a product being peeled by the peeling system using at least a first sensor for monitoring at least one characteristic of the product, and for monitoring the operation of the process.

The control system further comprises means for obtaining data from the at least first sensor to simulate the peeling process and a product flow through the peeling system in a virtual model, the simulation comprising;
means for comparing, using an optimizer of the virtual model, at least one simulated output of the virtual model with at least one desired output of the peeling system;
means for adjusting control parameters of the virtual model using an output of the optimizer and iteratively re-simulating the peeling process and product flow until the output from the virtual model matches the at least one desired output within a specified tolerance.

The control system further comprises means for applying, in real time, the adjusted control parameters from the simulation of the virtual model to the peeling system; means for running a product to be peeled through the peeling system;
Means for monitoring the product and peeling process and comparing the results to the simulation; means for utilizing any identified difference between a measured output of the peeling system and the output of the virtual model to refine the virtual model for more accurate representation of the output of the peeling system.

It has been described how existing control methods for peeling systems provide limited control over the system and the peeling process undertaken by the system. Furthermore, there is poor visibility of whether the process is being carried out sufficiently within a range of operating parameters to produce an output product which meets a desired specification. The present method as described provides for increased system uptime and increased effectiveness of peeling. This provides in turn for maximising the product yield and reducing wastage.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A method of controlling a peeling system comprising:
monitoring, in real time, of a peeling process of the peeling system and product being peeled by the peeling system using:
at least a first sensor for monitoring at least one characteristic of the product, and
for monitoring the operation of the process;
obtaining data from the at least first sensor for a simulation, the simulation to simulate the peeling process and a product flow through the peeling system in a virtual model, the simulation comprising;
comparing, using an optimizer of the virtual model, at least one simulated output of the virtual model with at least one desired output of the peeling system;
adjusting control parameters of the virtual model using an output of the optimizer and iteratively re-simulating the peeling process and product flow until the at least one simulated output from the virtual model matches the at least one desired output of the peeling system within a specified tolerance;
applying, in real time, the adjusted control parameters from the simulation of the virtual model to the peeling system;
running product to be peeled through the peeling system;
monitoring the product and peeling process and comparing the results to the simulation;
utilizing any identified difference between a measured output of the peeling system and the output of the virtual model to refine the virtual model for more accurate representation of the output of the peeling system.

2. The method of claim 1 wherein the virtual model comprises the optimizer and at least one of:
a simulator to represent the operation of the peeling system;
a simulated product flow to simulate the effect of the peeling system on the product;
a simulated product to simulate the effect of the product on the operation of the peeling system and/or the effect of the peeling system on the product.

3. The method of claim 2 wherein the optimizer is further configured to:
i) analyse the output of the simulator and its effect on the simulated product and/or product flow;
ii) compare the simulated output of the simulator to a pre-specified output; and
iii) adjust the control parameters to minimise a difference or error between the simulated output and the pre-specified output;
iv) repeat steps i) to iii) iteratively to provide optimized control parameters, wherein the optimized control parameters are determined when the
difference or error between the simulated output and the pre-specified output is within a predetermined tolerance, the pre-specified output being defined by a desired product specification.

4. The method of claim 3 further comprising:
applying the optimized control parameters to the peeling system.

5. The method of any preceding claim wherein the control parameters effect the adjustment of at least one of:
an input product volume control;
a primary peeler;
a secondary peeler;
a loose peel separator;
a washing system; and/or
a product sorting system;
of the peeling system.

6. The method of claim 5, wherein the control parameters effect the adjustment of at least one of:
a product flow through the peeling system;
a temperature at the primary peeler by the application of heat or heat carrying medium;
a temperature at the secondary peeler by the application of heat or heat carrying medium;
a peeling aggressiveness at the first peeler;
a peeling aggressiveness at the secondary peeler;
a sorting control for peel;
a sorting control for defects;
a sorting control for directing a specific volume of product;
a steam pressure in the system;
a vessel temperature at the primary and/or secondary peeler;
a vessel agitation at the primary and/or secondary peeler;
a rotation speed of the primary and/or secondary peeler;
a number of rotation cycles at the primary and/or secondary peeler.

7. The method of any preceding claims wherein a product flow comprises at least one of:
a product flow speed;
a product flow volume and or mass;
a product flow duration, pause or dwell time;
a product flow piece count.

8. The method of any preceding claim wherein a characteristic of the product comprises at least one of:
a product peelable skin coverage;
a product peelable skin quality;
a product non-peelable defect coverage;
a product size and/or surface area and/or volume;
a product temperature;
a product variety or type.

9. The method of any preceding claim where the output of the virtual model provides an indication of predicted peel removal quality and/or defect removal quality of the product.

10. The method of any preceding claims wherein the output of the virtual model is produced by applying machine learning and/or artificial intelligence to at least one of:
data from the at least first sensor to simulate the peeling process and product flow;
historical data of the peeling system;
data from at least one additional system, external to the peeling system;
data from additional simulations, external to the peeling system;
data from cloud storage and/or cloud computing systems.

11. A control system for a peeling system comprising:
means for monitoring, in real time, of a peeling process of the peeling system and a product being peeled by the peeling system using:
at least a first sensor for monitoring at least one characteristic of the product and for monitoring the operation of the process;
means for obtaining data from the at least first sensor for a simulation, the simulation to simulate the peeling process and a product flow through the peeling system in a virtual model, the simulation comprising;
means for comparing, using an optimizer of the virtual model, at least one simulated output of the virtual model with at least one desired output of the peeling system;
means for adjusting control parameters of the virtual model using an output of the optimizer and iteratively re-simulating the peeling process and product flow until the output from the virtual model matches the at least one desired output within a specified tolerance;
means for applying, in real time, the adjusted control parameters from the simulation of the virtual model to the peeling system;
means for running a product to be peeled through the peeling system;
means for monitoring the product and peeling process and comparing the results to the simulation;
means for utilizing any identified difference between a measured output of the peeling system and the output of the virtual model to refine the virtual model for more accurate representation of the output of the peeling system.

12. The system of claim 11 further configured to carry out the method of any of claim 2 to 10.
